# EUROPEAN PATENT SPECIFICATION

(11) **EP 3 915 422 B1**
(45) Date of publication and mention of the grant of the patent: **25.02.2026**
(21) Application number: 21186593.6
(22) Date of filing: 18.08.2010
(51) Int. Cl.: A43B 5/02, A43B 7/14, A43B 13/41, A43B 13/42, A43B 23/02, A43B 13/02, B29C 65/16, A43B 1/00, B29L 31/50, B29L 31/52, B29C 65/08, B29C 65/48, B29C 65/00

(54) **SPORTS SHOE**
SPORTSCHUH
CHAUSSURE DE SPORTS

(30) Priority: 18.08.2009 DE 102009028627
(43) Date of publication of application: 01.12.2021
(62) Divisional of application: 17181227.4
(73) Proprietor: adidas AG, 91074 Herzogenaurach (DE)
(72) Inventor: Weidl, Jürgen, 91074 Herzogenaurach (DE); Geyer, Harald, 91074 Herzogenaurach (DE); Antonelli, Bruno, Jean, 74940 Annecy le vieux (FR)
(74) Representative: Bardehle Pagenberg Partnerschaft mbB Patentanwälte Rechtsanwälte

(56) References cited:
- JP-A- 2000 201 703
- US-A- 913 012
- US-B1- 6 925 734

## Description

### 1. Technical field

The present invention relates to an outsole for a sports shoe and to a sports shoe, in particular a soccer shoe.

### 2. Prior art

In many sports, accelerations have a decisive influence on the performance of an athlete. For example in the case of a sprinter, it is not only the ultimate achievable speed, which is decisive for victory or defeat, but also how quickly this speed is reached. Even more important are accelerations in sports with frequent changes of direction. In particular for soccer, but also for other field sports, athletes frequently accelerate when, for example, they change direction while running or jump suddenly.

According to the laws of physics, the attainable acceleration directly depends on the mass to be moved. It is therefore an important objective in the design of sport shoes, in particular of soccer shoes, to reduce the overall weight as much as possible to increase the attainable acceleration at a given force. Presently, the lightest available soccer shoes have a weight of more than 165 g. Even such a weight, which might at first glance be considered as minor, impairs a player's agility, e.g. during fast dribbling with the ball. Furthermore, the inertial mass of the soccer shoe reduces the velocity of the leg when kicking the ball and thus reduces the speed of a shot of the ball. Finally, the inertial mass of the soccer shoe at the player's legs affects the fatigue of the player. The larger the mass that exerts leverage forces and torques on the body due to its arrangement at the lower extremities, the faster the player fatigues during the 90 minutes (or more) of a soccer match.

A number of approaches are known from the prior art to reduce the weight of the shoe. The US 2009/0071036, for example, discloses the use of carbon fibers in the upper part of a shoe. The US 2007/0271823 further discloses an upper, wherein a thin material layer is reinforced by a plurality of threads arranged on its outside. The US 2004/813,158 discloses a lightweight sports shoe having reinforcement in the transition area between midfoot and forefoot so that the shoe is capable of withstanding loads in spite of the thin and lightweight materials of the upper. The US 7,540,097 B2 discloses a shoe construction, wherein the upper comprises a dense matrix structure of repeatedly intersecting segments. The upper itself may be arranged inside the volume surrounded by the matrix structure so that the segments are arranged on the outside of the upper. The DE 20 2006 009 950 U, finally, describes a shoe having an upper, which comprises a floppy material, and at least one reinforcement element.

Apart from optimizing the upper of the shoe, attempts have also been made to modify the sole structure, since the sole of the shoe has a decisive influence on the overall weight. The US 2009/0064535 e.g. discloses a sole ensemble, wherein a plate from a composite material is glued to a cut-out of a sole. The DE 7 819 461 U1 discloses a sole body having a carrying grid arranged on the inside of sole body. The DE 20 2005 021682 U1 describes a coarse grid arranged in holes of a sole. The inside of the sole is provided with bridges, and the sole is covered by an intermediate sole. The US 6 925 734 B1 relates to a shoe having an arch support extending from an interior of a shoe to an exterior of a shoe. The arch support can be adjusted from the exterior of the shoe. The arch support includes straps which each have a slide groove formed therein. On one end of each strap are strap eyelets.

Document US913012A discloses an article of footwear, comprising a shoe upper with a closure region and a sole region; at least a reinforcing element attached to the inside of the shoe upper arranged in the midfoot part and comprising a plurality of elastic bands extending between the closure region and the sole region, wherein the at least one reinforcing element further comprises a lower band extending along an edge of the sole region, wherein the plurality of elastic bands comprises elastic bands at the medial inside and at the lateral inside of the shoe upper.

However, none of the above-described approaches have succeeded in substantially reducing the weight of a sports shoe without deteriorating its functional properties, i.e. the grip on the ground, the support for the foot, the wearing comfort, etc. or without substantially increasing the manufacturing efforts.

The present invention is therefore based on the problem to at least partly overcome the disadvantages of known shoe constructions by providing a sports shoe which have a substantially reduced weight compared to known solutions but which at the same time meet the requirements of stability, wearing comfort and traction at reduced manufacturing costs.

### 3. Summary of the invention

This problem is solved by embodiments of the present invention as defined by claim 1.

### Summary of the disclosure

A plurality of technical features contribute to significantly reduce an overall weight of the outsole and the sports shoe when compared to the weight of known shoe constructions. If all of these features are combined, an overall weight of 126 g can be achieved for a soccer shoe, i.e. a value which is far below the weight of soccer shoes known from the prior art, without impairing the functional properties of the shoe.

However, it is to be understood that a substantial reduction of the weight can already be achieved if only some of the features discussed in the following are realized. The present invention therefore provides a kind of toolbox of technical features which can be combined by the person skilled in the art in an almost arbitrary manner in order to reduce the weight of a sports shoe.

An outsole comprises an integral sole plate extending from a heel part via a midfoot part into a forefoot part of the outsole. At least one first reinforcing rib is integrated into the sole plate and a reinforcing plate is arranged above or below the at least one reinforcing rib.

The integral outsole extending essentially over the complete length of the shoe and comprising one or more reinforcing ribs can be cost-efficiently manufactured by injection-molding of a lightweight but highly-stable plastic material. The reinforcing ribs are preferably arranged in the midfoot part and provide a selective stiffening of this sole region for supporting the arch of the foot. They can be arranged above or below the sole plate (or may even replace the sole plate in some areas). The reinforcing ribs result in a specific stiffening of the sole and may have for this purpose suitable forms and profiles, for example a T-like profile. A cavity is arranged between the sole plate and the at least one reinforcing rib. Thus the sole plate can be formed more thinly in this area which results in a significant reduction of weight.

Besides a further stiffening of the outsole at the side directed to the foot, the reinforcing plate, which is arranged above the at least one reinforcing rib provides the possibility to have an essentially smooth surface on the side directed to the foot due to its arrangement on top of the reinforcing rib. As a result, a foot of an athlete can directly rest on the outsole without uncomfortable pressure loads on the sole of the foot. In a reverse arrangement, in which the reinforcing plate is arranged below the reinforcing rib, the area of the sole plate, which is formed more thinly, can seamlessly attach to other areas of the sole plate at the inside of the outsole directed to the foot so that also in this case a smooth area of support is formed. A multilayered sole ensemble and corresponding weight can therefore be essentially avoided. The addition of a thin insole is preferred to improve the wearing comfort at the smallest possible increase of weight.

The reinforcing plate is preferably made from a material transparent to a laser beam allowing an interconnection to the integral sole plate by laser welding. A laser beam passes through the reinforcing plate and creates a localized heating and thus a melting of the material of the sole plate. Alternatively, the sole plate can be fabricated from a material transparent to a laser beam and the reinforcing plate from a non transparent material so that at the incidence of the laser light the reinforcing plate is selectively melted. Compared to using an adhesive to connect sole parts, laser welding does not result in an increase in weight. Similar advantages can also be obtained by ultrasonic welding.

The at least one reinforcing rib has preferably a height and/or a width of ≤ 5 mm, preferably of ≤ 3 mm. Applicant has found that modern plastic materials, e.g. a fiber reinforced polyamide (PA12) provide the required stiffness in the midfoot area and in other parts of the outsole even if such small dimensions are used (leading only to a very minor increase in weight).

In one embodiment, at least two first reinforcing ribs of the integral sole plate extend essentially in longitudinal direction of the shoe. Preferably, there is at least one further first reinforcing rib which extends essentially transversely over the midfoot part of the shoe. As a result, a framework is provided, stiffening the integral sole plate in the area of the arch of the foot against both a bending in longitudinal direction as well as a bending in a transversal direction. If the reinforcing plate comprises at the side directed to the sole plate at least one second reinforcing rib, which is at least partially parallel to the at least one first reinforcing rib, a midfoot part is created having a maximal bending stiffness at the lowest weight.

If the outsole for a sports shoe is to be used for track and field sports or the like, it preferably comprises a plurality of profile elements formed in the integral sole plate. In the prior art such profile elements are typically separately manufactured and subsequently anchored to corresponding receptacles of the sole. The preferred embodiment avoids the weight of such receptacles by integrally manufacturing the profile elements together with the sole plate. Furthermore, the profile elements are preferably not solid but comprise hollow cavities, thereby further reducing the weight of the shoe.

In order to improve its functional properties, it is preferred, if the integral sole plate is made of a first material and at least one of the profile elements comprises a portion made of a second material, e.g. a somewhat softer TPU (thermoplastic urethane), on the side directed to the ground to provide some cushioning when walking on the profile elements. Alternatively, it is also possible to use a harder material, e.g. if the shoe is to be used on hard and dry grounds. Together with the sole plate the portion made from a second material can be efficiently manufactured by multi-component injection molding. It is also possible to extrusion-coat the portion made in a first manufacturing step with the surrounding sole material.

In the heel part, the integral sole plate preferably comprises a heel cup having preferably a side portion made from a third, softer material such as TPU. The side portion can also be manufactured together with the rest of the sole plate using multi-component injection-molding. Such a heel cup supports the foot from the side and the rear side and together with the profile elements enables the wearer to achieve a fast acceleration. The lateral parts can be injection-molded from the softer material so that there is no need for complex and heavy cushioning in the heel part of the upper. This is a further measure to reduce the overall weight of the sports shoe without impairing its functional properties.

The invention is defined in independent claim 1.

Accordingly, a sports shoe, in particular a soccer shoe comprises a shoe upper having a closure region and a sole region. A reinforcing element is attached to the inside of the shoe upper encompassing all of the midfoot and including a plurality of elastic bands extending from the closure region to the sole region.

The described arrangement of the plurality of bands in the midfoot part between the closure region and the midfoot region reinforces the upper of the shoe and allows a firm attachment of the upper to the foot with the sole being arranged underneath. In doing so, it is not necessary that the bands have to extend across the complete distance between the closure region and the sole region. It is sufficient if the material of the shoe upper is sufficiently reinforced by the bands arranged in the midfoot part.

According to the invention, the reinforcing element comprises bands which are arranged on both the medial and the lateral insides of the shoe upper, wherein the bands on the medial inside of the shoe upper are preferably more elastic than on the lateral inside of the shoe upper. For this reason, on the one hand, the stability of the shoe is improved with respect to lateral loads, for example during sudden changes of the direction, and, on the other hand, the flexibility of the shoe upper is maintained, which for a soccer shoe enables a smooth rolling-off and a precise feel for a ball.

For the mentioned stability and flexibility of the shoe, it is preferred if the bands at the lateral inside of the shoe upper are inelastic under the loads occurring generally in a sports shoe and the bands at the medial side of the shoe upper have less intersections among each other than the bands on the lateral side of the shoe upper. The more intersections or crosslinkings the bands have among each other, the more stable the shoe upper will be. With it, however, the flexibility decreases, so that for example for a soccer shoe, the bands at the medial side preferably do not have any intersections at all. Such an open structure of the bands enables the shoe upper to be stretched in a direction transversal to the bands, i.e. essentially in longitudinal direction of the shoe, which is required for example for an unhindered rolling-off of the forefoot part.

The materials for the shoe upper can be particularly lightweight, such as a textile material having a TPU coating or a (carbon) fiber reinforced composite material, since tensile forces within the upper of the shoe are sustained by the described bands. The flat bands of the reinforcing elements are arranged on the inside of the upper of the shoe without impairing the wearing comfort. The reinforcing element is preferably made of a material having a thickness of less than 1.5 mm, preferably less than 0.3 mm. Each band preferably has a width between 0.5 cm and 2 cm. These dimensions allow the manufacturing of the essentially non-yielding bands from a plurality of materials such as a lightweight, reinforced PET (polyethylene terephthalate) as it is used for windsurf sails. To improve the wearing comfort, the PET can be extrusion-coated with foamed polyurethane (PU).

Since the reinforcing element is arranged on the inside of the upper of the shoe, the outside of the shoe upper can meet other requirements, e.g. for an optimized ball contact, if the sports shoe is a soccer shoe.

In case of a soccer shoe, it is further preferred that the reinforcing element comprises a reinforcing area to reinforce a ball contact surface of the upper of the shoe, wherein the reinforcing area is integrally manufactured together with the plurality of bands. The reinforcing area is preferably arranged on the medial side of the upper of the shoe where most of the ball contacts will occur. The reinforcing area can extend over the forefoot part and may comprise a foamed material which cushions the arising loads on the foot during hard ball contacts. This feature also contributes to a reduction of the weight of the shoe, since it allows the manufacture of the upper of the soccer shoe from a significantly thinner and lighter material.

In order to reduce weight, it is preferred if the reinforcing element does not encompass the forefoot part nor the heel. In the forefoot part, contact with the ball is needed as directly as possible, e.g. during dribbling or when shooting a ball with a spin. In the heel part, the bands are not necessary, since the shoe will already have the required stability, e.g. due to the use of the above described outsole and the integrated heel cup.

Further possible features of the present invention are the subject matter of further dependent claims.

### 4. Short description of the figures

In the following, aspects of the present invention are further explained with reference to the figures. These figures show:
Fig. 1: An inclined lateral front view of a first embodiment of a sports shoe according to the present invention;
Fig. 2:An inclined lateral rear view of the embodiment of Fig. 1;
Fig. 3:A schematic representation of an embodiment of an outsole;
Fig. 4:A top view of a transparent reinforcing plate for an embodiment of the invention;
Fig. 5:A schematic cross-section through the outsole of Fig. 3;
Fig. 6:A detailed representation of an upper of a shoe and a reinforcing element according to a further embodiment;
Fig. 7: A schematic view of an outsole according to a further embodiment;
Fig. 8:A bottom view of the outsole of Fig. 7;
Fig. 9:A view of a further embodiment of a planar spread reinforcing element for the shoe upper having an integrated reinforcing area; and
Fig. 10: A view of a further embodiment of the planar spread reinforcing element for the shoe upper.

### 5. Detailed description of the preferred embodiments

In the following, presently preferred embodiments of the invention are further described with reference to a soccer shoe. It is to be understood that the present invention can also be used for other sport shoes (and beyond) e.g. in sports shoes for other field sports, such as hockey, rugby or American football, etc. but also for running sports such as sprints or hurdle races. The technical concepts for weight reduction of a shoe can always be advantageously applied if high requirements on the mechanical stability and the biomechanical properties of the shoe are to be combined with a minimal weight.

As explained above, it is by no means mandatory to combine all features which can contribute to reducing the weight. On the contrary, the person skilled in the art will understand that the aspects explained in the following for reducing the weight of the shoe can be combined in an almost arbitrary manner in order to at least partially achieve advantages compared to the prior art.

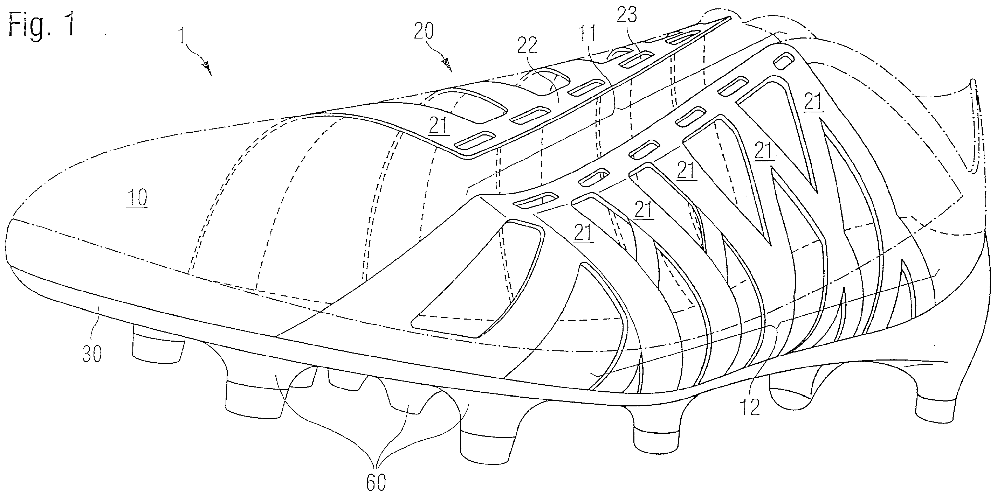

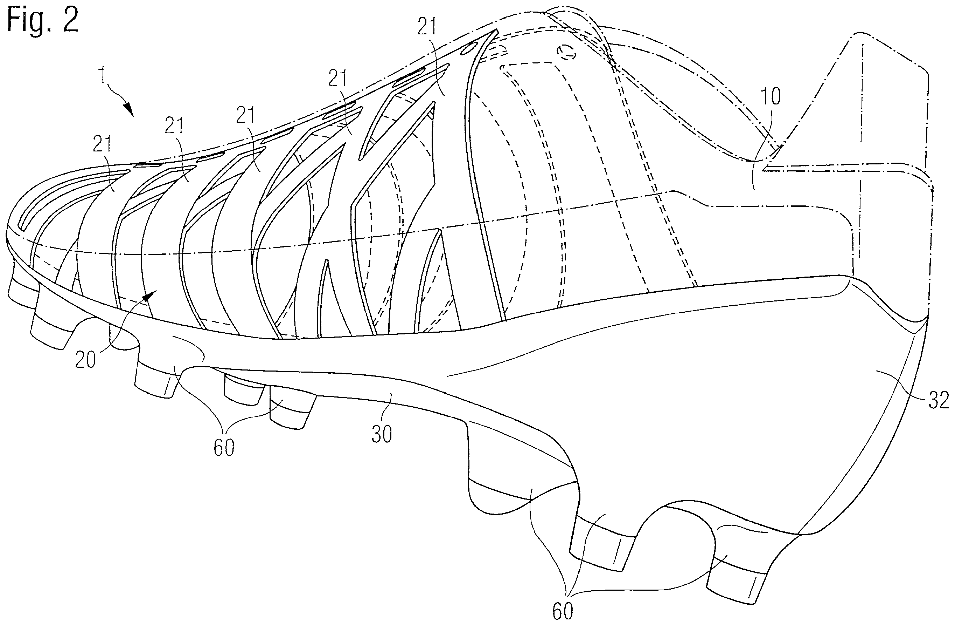

Figures 1 and 2 show a first embodiment of the soccer shoe 1 in an inclined lateral front view and an inclined lateral rear view. The schematically presented shoe upper 10 can be seen as well as the frame-like reinforcing element 20 arranged on its inside. A plurality of materials can be used for the shoe upper 10 which are both lightweight and have sufficient wear resistance. Presently preferred are textile materials such as a nylon mesh. On the outside and/or the inside, the textile material can be additionally reinforced by a suitable coating such as a transparent TPU layer (not shown in Figs. 1 and 2). Such a transparent plastic layer protects design elements, prints, labels, etc. arranged below the plastic layer on the outside of the shoe upper 10. Moreover, the plastic layer prevents the penetration of humidity and therefore contributes to the wearing comfort and a long lifetime of the sports shoe. For improving ventilation, the coating as well as the material of the upper 10 may be perforated or - in a modified embodiment - even have larger ventilation slits (not shown).

The above-mentioned reinforcing element 20 is arranged on the inside of the shoe upper 10 shown in Figures 1 and 2. As can be seen, several bands 21 form a frame-like element extending from the sole region 12 to the closure region 11 of the shoe 1 and almost completely encompass the midfoot (not shown) of a wearer of the shoe. The flat bands 21 have a small thickness, preferably ≤ 1.5 mm, more preferably ≤ 0.2 mm and can therefore be arranged on the inside of the shoe upper 10 without affecting the wearing comfort. For the bands 21 on the medial and the lateral side preferably TPU foils are used with a thickness of approximately 0.2 mm. In doing so, the hardness of the material used for TPU foils is lower on the medial side (e.g. 80 - 85 Shore A) and higher on the lateral side (e.g. more than 90 Shore A, preferably 95 Shore A). Thus, bands 21, when placed in tension by the connection to the shoe upper 10, are less elastic on the lateral side under the expected tensile loads then bands 21 on the medial side, which are more elastic. Thus bands 21 do not noticeably impair the rolling-off and the feel for a ball at the contact with the inner instep of the shoe upper 10.

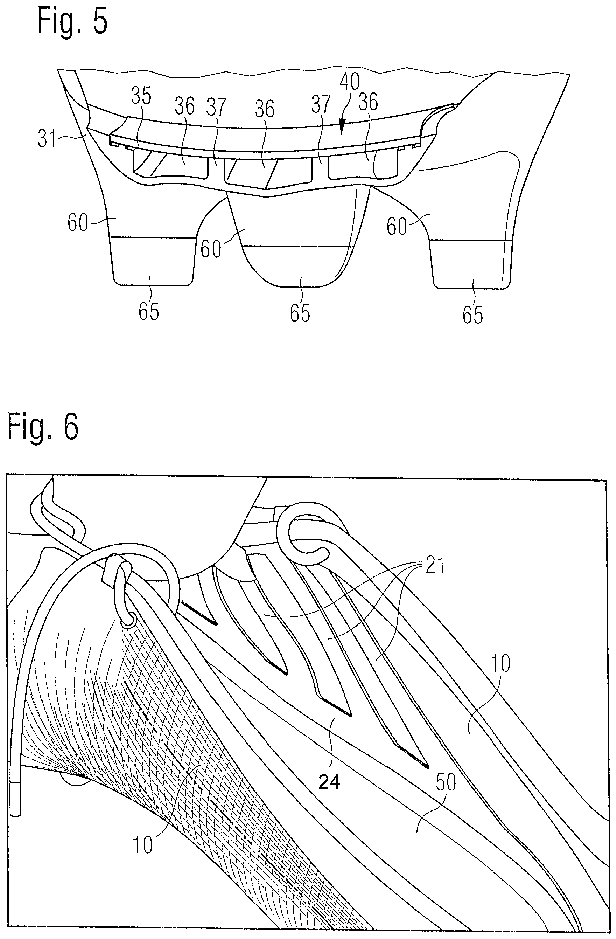

The arrangement of the bands 21 of the reinforcing element 20 determines the deformation properties of the upper of the shoe 10 and thereby the stability which the shoe 1 provides for the foot during ground contact. Fig. 6 shows an embodiment wherein the bands 21 extend almost parallel to each other from the closure region 11 at the laces to the sole region 12. Such arrangements of the bands 21 as well as a further cross-linked arrangement of the bands 21 in the embodiment of Figs. 1 and 2 ensures that the outsole 30 is securely attached from below to the sole of the foot and the foot does not slide forth and back on the outsole 30 when the laces of the shoe 1 and the closure region 11 are tightened (or when other means for closing the shoes that are not shown such as Velcro^{®} bands are used).

However, the lesser the amount of cross-linking between the bands 21, the lower is the resistance of the reinforcing elements 20 against a flexing of the shoe upper 10, e.g. during rolling-off. The upper 10 of the sports shoe of Fig. 6 having bands 21 without any intersection provides a very low resistance against such a flexing. In an embodiment of a soccer shoe of Figures 1 or 2 each band 21 on the lateral side of the shoe upper 10 intersects with up to two other bands 21 or is cross-linked with them in a different manner, whereas the bands 21 on the medial side are essentially parallel to each other so that the lateral side is more stable and the medial side is more elastic.

Depending on the field of use of the shoe, the person skilled in the art will select on the medial and/or the lateral side of the shoe upper 10 the right amount of cross-linking of the bands 21. For example, a sports shoe for strong and frequent lateral loads will have a reinforcing element 20 with more cross-linked bands 21 than a sprint shoe, since lateral sports make higher demands on the lateral stability of a shoe than linear sports.

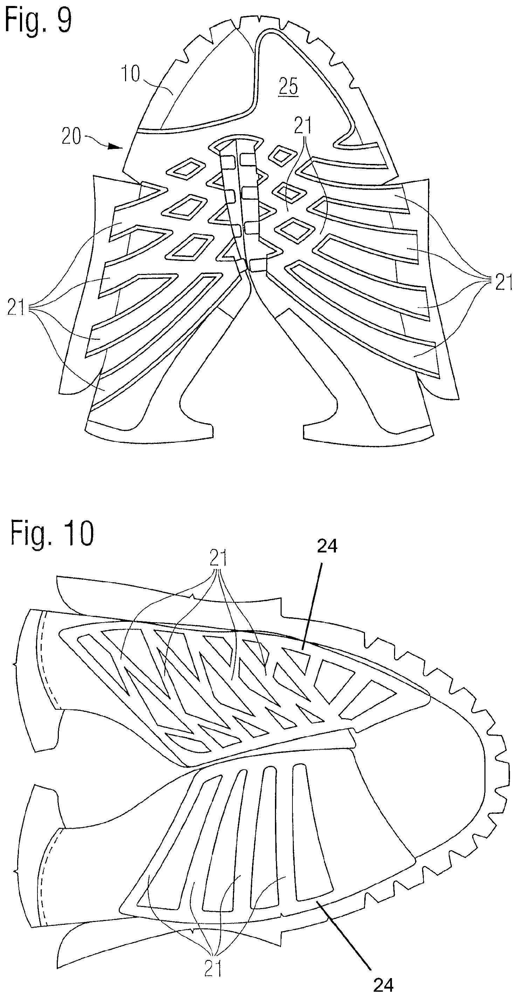

For reliably transmitting the tension forces caused by the closure system to the bands 21, an upper band 22 of the reinforcing element 20 is preferably arranged along the edge of the closure region 11, as shown in Fig. 1 and Fig. 10. Openings 23 for laces may be integrated into the upper band 22 or other arbitrary closure devices are attached to this band (not shown). The upper band 20 distributes a load onto several bands 21, so that high forces can be sustained by the reinforcing element 20 in case of a tight lacing. In a similar manner, the bands 21 can also be interconnected at the lower end by a lower band 24 (not shown in Figs. 1 and 2, but see Fig. 6 and Fig. 10).

Fig. 9 shows an example of a further embodiment of the upper of the shoe 10 and the corresponding reinforcing element 20 in a planar representation prior to the assembly of the shoe. As can be seen, a band 21 intersects up to two other bands 21 before reaching a position corresponding to closure region 11 (the inner part of Fig. 9) of shoe 1 starting from a position corresponding to sole region 12 (the outer part in Fig. 9).

The intersections of the band 21 are in this embodiment arranged only in the upper part of the reinforcing element 20, i.e. adjacent to the closure region 11 in order to not impair a flexing of the shoe upper 10 in its lower part, e.g. during rolling-off.

The embodiment of Fig. 9 further shows that the reinforcing element 20 can be integrally manufactured including a medial and a lateral side. An additional reinforcing area 25 is preferably provided on the medial side in the forefoot region, i.e. in front of the bands 21 which encompass the midfoot-part. The reinforcing area 25 further reinforces the upper 10 of the shoe. In contrast to the bands 21, the reinforcing area 25 serves as a support to the material of the shoe upper 10 in areas wherein a frequent ball contact is expected. This feature allows the manufacture of the upper of the shoe 10 from a thin and particularly lightweight material without impairing the wearing comfort or wear resistance.

Fig. 10 shows again in top view the preferred asymmetric arrangement of the bands 21 of the reinforcing element 20 on the medial and the lateral sides of the shoe upper 10. As can be recognized, the bands 21 intersect several times on the lateral side or are cross-linked with each other, whereas the bands 21 on the medial side extend separately from each other. It is additionally recognized that not all bands 21 need have identical dimensions, but can be individually adjusted according to their respective position in the reinforcing element 20. Finally, more bands 21 are arranged on the lateral side than on the medial side. Each of the mentioned differences of the set-up of the reinforcing element on the medial and the lateral sides independently contribute to the desired asymmetric expansion behaviour of the shoe in the forefoot part. In addition, bands 21 are connected by an upper band 22 and a lower band 24, as also indicated in fig. 10.

In the case of a soccer shoe, the forefoot area of the shoe can be further optimized, e.g. by arranging a thin leather material covering the forefoot part from the outside or by arranging elements on the shoe upper 10 providing an improved grip on the ball (not shown).

Apart from an arrangement on the inside of the shoe upper 10, as shown in Figs. 1, 2 and 6, as presently preferred, the reinforcing element 20 can, in a modified embodiment, also be arranged on the outside of the shoe upper 10 (not shown). In contrast to known reinforcing structures on the outside of a shoe upper 10 of a sports shoe, the flat bands 21 do not significantly influence the other properties of the shoe, e.g. the shooting properties when contacting a ball, in case of a soccer shoe. Further, it is possible to integrate the reinforcing element 20 between two layers of a thin and therefore lightweight material of the shoe upper 10 (not shown). Additionally or alternatively, the reinforcing element 20 could be extrusion-coated with a further material.

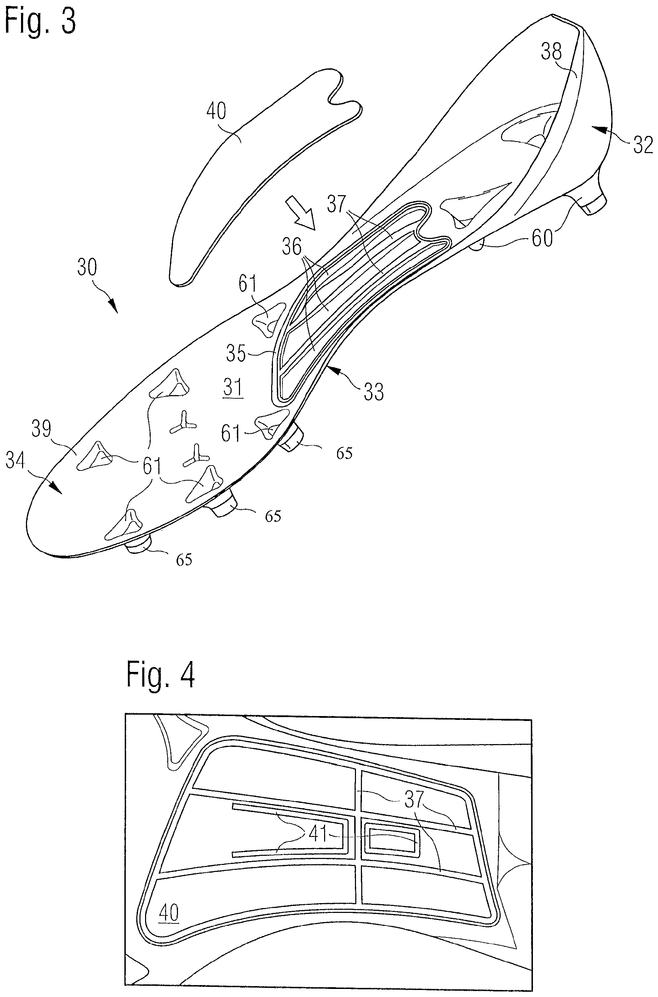

Figs. 3 to 5, 7 and 8 illustrate a further important aspect of the present invention, i.e. the particularly lightweight but nevertheless highly stable outsole 30. As can be seen from the exploded view in Fig. 3, the outsole comprises an integral sole plate 31 extending from a heel cup via the midfoot part 33 up to a planar forefoot part 34. A recess 35 is arranged in the midfoot part 33, comprising a plurality of reinforcing ribs 37 molded therein. While in the embodiment of Figs. 3 and 5 two reinforcing ribs 37 extend in a longitudinal direction of the sole plate 31, the top view of the embodiment in Fig. 4 shows a further, transversely extending reinforcing rib 37 below a transparent reinforcing plate 40.

The shape, orientation and number of the reinforcing ribs 37 are selected to provide a high stiffness and breakage stability at low weight. In the presented embodiment of an outsole 30 for a soccer shoe, the midfoot part 33 below the arch of the foot is selectively stiffened. For other sports, other areas of the integral sole plate 31 may be additionally or alternatively stiffened by one or more reinforcing ribs 37.

The reinforcing ribs 37 preferably comprise a thickness of a few millimeters, preferably ≤ 3 mm. As a result, a very stiff midfoot part 33 can be provided if suitable plastic materials are used, e.g. a polyamide No. 12 (PA 12) reinforced with fibers. However, it is also possible to use wider and/or higher reinforcing ribs 37 for other sports, e.g. basketball due to the higher loads. Furthermore, the shape of the reinforcing ribs 37 also depends on the material used for the sole plate 31. Both the reinforcing plate 40 as well as the sole plate 31 can be manufactured from a fiber reinforced plastic material.

The discussed sole plate 31 is preferably manufactured by injection-molding a suitable plastic material. This manufacturing method allows automatically producing high numbers in a short amount of time.

In order to further stiffen the midfoot part 33, a reinforcing plate 40 is arranged on top of the reinforcing ribs 37, and is arranged in the recess 35 in a manner that an essentially flat contact surface is provided for a wearer's foot on the top side. The term "essentially" in this context refers to configuring the height of reinforcing plate 40 such that the top side reinforcing plate 40 aligns with the top side of sole plate 31 so that local pressure points on the lower side of the foot in the transition region between the sole plate 31 and the reinforcing plate 40 are avoided. In contrast to a sole ensemble of the prior art, there is no need to provide a midsole, but the foot can directly contact the flat surface of the sole plate 31 and the reinforcing plate 40. However, for improving the wearing comfort, it is presently preferred if a thin inlay sole 50 is arranged between the foot and the top surfaces of the sole plate 31 and reinforcing plate 40 (cf. Fig. 6).

In this case, the overall sole ensemble consists of these two layers, the sole plate 31 and its reinforcing plate 40 and a thin inlay sole 50. It is apparent that an extremely low weight of the outsole 30 and the overall shoe 1 can be realized by this approach. If the inlay sole 50 comprises a plurality of perforations, the weight is further reduced and at the same time, the ventilation of the foot is improved.

The reinforcing plate 40 can be manufactured from the same or different material as the sole plate 31. Presently preferred materials are composite materials and polyamides, e.g. the polyamide sold under the trade name Pebax^{®}. If a rigid interconnection of the reinforcing plate 40 with the sole plate 31 is desired - which is not mandatory - known methods can be used such as gluing or welding. For reasons of weight, but also for an effective manufacture, it is preferred if the reinforcing plate 40 has a sufficient transparency for laser radiation so that it can be welded to the subjacent material of the sole plate 31 using a laser. This method avoids the weight of an additional adhesive as well as the problems related to its processing (health risks and environmental problems due to the contained solvents, etc.).

The connection of the reinforcing plate 40 to the sole plate 31 is particularly rigid if the reinforcement plate 40 comprises on its lower side also one or more reinforcing ribs 41 (cf. Fig. 4) leading to a positive fit in the recess 35 and with reinforcing ribs 37 of the sole plate 31. This is particularly the case if the reinforcing ribs 37 and the reinforcing ribs 41 are at least partially parallel. Additional weight can be saved if the sole plate 31 is formed in the areas of the reinforcing ribs 37 so that one or several cavities 36 result between the sole plate 31 and the reinforcing plate 40 as can clearly be recognized from the sectional drawing of Fig. 5.

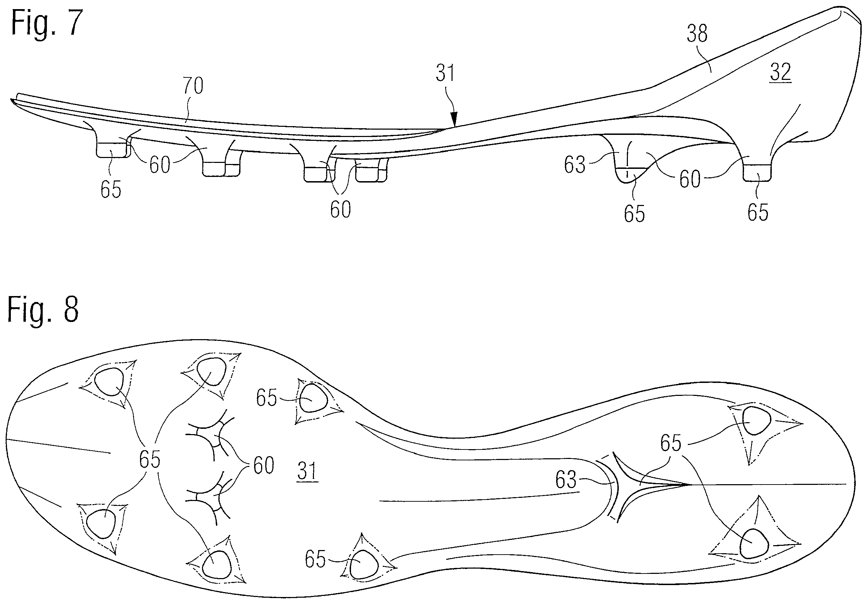

For sports, such as, for example soccer, that commonly impose high pressure loads in the forefoot part 34, a further flat and lightweight insole 70 may be arranged in the forefoot part 34 on top of the sole plate 31 (cf. Fig. 7). The insole evenly distributes the pressure loads onto the foot and avoids in particular point loads at the profile elements 60 which are integral with the sole plate 31 and explained further below. Moreover, the insole 70 facilitates the manufacturing of the sole, since the upper material can be lasted and/or adhered about it. Apart from an arrangement exclusively in the forefoot part, it is also conceivable to extend the insole 70 across the overall length of the shoe.

The insole 70 is preferably also manufactured from a plastic material. In addition the insole 70 has indentations or other intentional material weaknesses in order to facilitate a rolling-off of the foot in the forefoot part 34 (not shown). For example one or more line-shaped grooves may extend transversely in the plastic material from the lateral to the medial side of the insole 70 or extend only over a part of the insole 70. As a result, a sufficient flexibility is provided in the forefoot part 34 together with the required even pressure distribution. Moreover, the insole 70 may have a thickened rounded edge (not shown), which avoids the material of the shoe upper 10 being damaged by strong lateral loads at the edge of the insole 70.

An easy rolling-off with the forefoot is additionally facilitated in the preferred embodiment by the sole plate 31 and its essentially flat forefoot part. Only a small surrounding rim 39 projects by 1 to 2 mm to facilitate the arrangement of the insole 70 and/or the inlay sole 50 and/or the shoe upper 10 on the sole plate 31.

The heel cup is arranged in the heel part 32 of the sole plate 31. The heel cup securely encompasses and guides the foot from the rear side without requiring any additional reinforcements of the shoe upper 10 in the heel part 32, which further reduces the weight of the shoe. The exact shape of the heel cup once more depends on the intended field of use of the shoe. For example, a basket ball shoe may have a higher heel cup than a sprint shoe in order to provide the sports shoe with a higher amount of stability against the expected loads. For a better wearing comfort, it is preferred if the border regions 38 on the sides of the heel cup are made of a softer plastic material. This feature avoids uncomfortable local pressure loads on the foot of a wearer, in particular given the thin and lightweight materials that are used for the shoe upper 10. Using multi-component injection molding and adding a softer plastic material, such as for example TPU, the heel cup of the sole plate 31 can be easily connected to the other material of the sole plate 31, e.g. the above mentioned PA 12 using an automated production process. The shoe upper 10 could also directly be stitched with the lateral edge of the heel cup (not shown) which would also result in a material saving and a weight reduction.

A further important aspect of embodiments is the direct integration of a plurality of profile elements 60 into the sole plate 31. Applicant has found that plastic materials which are suitable for the manufacturing of the sole plate 31 also have a sufficient stability and wear resistance for the profile elements 60. Complex and heavy attachment devices as they are used in soccer or sprint shoes according to the prior art are not necessary. This is a further aspect which contributes to reducing the overall weight of the shoe.

As can be seen in Figs. 1, 2, 3, 5, 7 and 8, there is a total of 11 profile elements 60 integrated in the sole plate 31 in the described embodiment of a soccer shoe 1. Eight profile elements 60 are arranged in the forefoot part 34 and three profile elements 60 are arranged in the heel part 32. The number of the profile elements 60 as well as their dimension and shape depend on the field of use of the sports shoe and may therefore substantially vary from the embodiment shown in the Figures. However, the selected arrangement is preferred since it minimizes the risk that grass, mud, etc. stick beneath shoe 1 at the outsole thus avoiding an increase of the weight of the shoe during use.

In the embodiment shown in the Figures, the foremost of the three profile elements 60 of the heel part 32 has a particular shape. Here, an area 63 directed to the front is concavely curved to provide a strong deceleration in the ground. By this particular shape an additional stud at the heel part 32 can be saved. Otherwise, the profile elements 60 of the embodiment of the bottom view of Fig. 8 have a triangular shape with significantly rounded peaks. The (rounded) peaks of the four foremost studs in the forefoot part 34 are directed to the front, so that the broad area of the studs can be used to sprint / accelerate. The two rear studs of the forefoot part 34 and the studs of the heel part 32 are directed with their broad side to the front, and therefore support the braking effect.

The particularly low weight of the sole plate 31 and its integrated profile elements 60 is achieved if the profile elements 60 are at least partly hollow. In the embodiment of Fig. 3, it can be seen that the cavities 61 of the profile element 60 are open to the top side. This facilitates the removal a mold during the preferred manufacture of the sole plate 31 and the integrated profile element 60 by injection molding. Cavities 61 may alternatively be closed in the interior of the profile elements 60 if suitable manufacturing methods are used. Furthermore, profile elements 60 which are subject to special loads may be completely or partially made of massive plastic material. The preferred manufacture of the sole plate 31 by injection molding provides a high amount of design freedom.

If multi-component injection-molding is used it is possible to make only a part or a portion of the profile elements 60 from a material other than the plastic material of the sole plate 31. For example in the soccer shoe shown in the Figures, a softer plastic material such as TPU is used to provide a portion 65 on six of the eight profile elements 60 of the forefoot part 34 and on two of the three profile elements of the heel part 32. The portion 65 can additionally be roughened or can be profiled. Providing such a portion 65 avoids a premature abrasion of the subjacent profile element 60, which is made from the plastic material of the sole plate 31. Furthermore, the somewhat softer TPU portions 65 improve the wearing comfort of the shoe 1. An integral manufacture of the portions 65 together with the sole plate 31 is preferred. However, it is also possible to manufacture the portions 65 independently from the sole plate 31 and to subsequently attach them in a separate manufacturing step on the profile elements 60, e.g. by gluing, screwing, clipping, or also by insertion in a form and subsequent extrusion-coating.

## Claims

1. A sports shoe (1), in particular soccer shoe, comprising:
a. a shoe upper (10) with a closure region (11) and a sole region (12);
b. at least a reinforcing element (20) attached to the inside of the shoe upper (10) arranged in the midfoot part and comprising a plurality of elastic bands (21) extending between the closure region (11) and the sole region (12), wherein the at least one reinforcing element (20) further comprises a lower band (24) extending along an edge of the sole region (12),
c. wherein the plurality of elastic bands (21) comprises elastic bands (21) at the medial inside and at the lateral inside of the shoe upper (10); and
d. wherein at least two elastic bands (21) intersect.

2. The sports shoe (1) according to claim 1, wherein the elastic bands (21) at the medial inside of the shoe upper (10) are formed more elastic than at the lateral inside of the shoe upper (10).

3. The sports shoe (1) according to claim 2, wherein the elastic bands (21) at the lateral inside of the shoe upper (10) are essentially inelastic.

4. The sports shoe (1) according to one of the claims 1-3, wherein at least two elastic bands (21) are substantially parallel.

5. The sports shoe (1) according to one of the claims 1-4, wherein the at least one reinforcing element (20) is manufactured from a material having a thickness of at most 1.5 mm, preferably of 0.3 mm.

6. The sports shoe (1) according to one of the claims 1-5, wherein each elastic band (21) has a width between 0.5 cm and 2 cm.

7. The sports shoe (1) according to one of the claims 1-6, wherein the at least one reinforcing element (20) further comprises an upper band (22) extending along an edge of the closure region (11).

8. The sports shoe (1) according to one of the claims 1-7, wherein the upper band (22) extending along the edge of the closure region (11) comprises a plurality of openings (23) for laces.

9. The sports shoe (1) according to one of the claims 1-8, further comprising an outsole (30) comprising:
a. an integral sole plate (31), extending from a heel part (32) via a midfoot part (33) into a forefoot part (34) of the outsole (30);
b. at least one first reinforcing rib (37) integrated into the sole plate (31); and
c. a reinforcing plate (40) arranged on top or below of the at least one first reinforcing rib (37).

10. The sports shoe (1) according to claim 9, wherein at least one cavity (36) is arranged between the sole plate (31) and the at least one reinforcing plate (40).

11. The sports shoe (1) according to one of the claims 9-10, wherein the reinforcing plate (40) comprises on its side directed to the sole plate (31) at least one second reinforcing rib (41) which extends at least partially parallel to the at least one first reinforcing rib (37).

12. The sports shoe (1) according to one of the claims 9-11, wherein the heel portion (32) of the integral sole plate (31) comprises a heel cup (32).

13. The sports shoe (1) according to claim 12, wherein the heel cup comprises at least one side area (38) made from a third material which can be manufactured by multi-component injection moulding with the rest of the sole plate (31).

## Patentansprüche

1. Sportschuh (1), insbesondere Fußballschuh, umfassend:
a. ein Schuhoberteil (10) mit einem Verschlussbereich (11) und einem Sohlenbereich (12);
b. mindestens ein Verstärkungselement (20), das an der Innenseite des Schuhoberteils (10) angebracht ist, im Mittelfußteil angeordnet ist und eine Vielzahl von elastischen Bändern (21) umfasst, die sich zwischen dem Verschlussbereich (11) und dem Sohlenbereich (12) erstrecken, wobei das mindestens eine Verstärkungselement (20) ferner ein unteres Band (24) umfasst, das sich entlang einer Kante des Sohlenbereichs (12) erstreckt,
c. wobei die Vielzahl von elastischen Bändern (21) elastische Bänder (21) an der medialen Innenseite und an der lateralen Innenseite des Schuhoberteils (10) umfasst; und
d. wobei sich mindestens zwei elastische Bänder (21) schneiden.

2. Sportschuh (1) nach Anspruch 1, wobei die elastischen Bänder (21) an der medialen Innenseite des Schuhoberteils (10) elastischer ausgebildet sind als an der lateralen Innenseite des Schuhoberteils (10).

3. Sportschuh (1) nach Anspruch 2, wobei die elastischen Bänder (21) an der lateralen Innenseite des Schuhoberteils (10) im Wesentlichen unelastisch sind.

4. Sportschuh (1) nach einem der Ansprüche 1-3, wobei mindestens zwei elastische Bänder (21) im Wesentlichen parallel sind.

5. Sportschuh (1) nach einem der Ansprüche 1-4, wobei das mindestens eine Verstärkungselement (20) aus einem Material mit einer Dicke von höchstens 1,5 mm, vorzugsweise von 0,3 mm, hergestellt ist.

6. Sportschuh (1) nach einem der Ansprüche 1-5, wobei jedes elastische Band (21) eine Breite zwischen 0,5 cm und 2 cm aufweist.

7. Sportschuh (1) nach einem der Ansprüche 1-6, wobei das mindestens eine Verstärkungselement (20) ferner ein oberes Band (22) umfasst, das sich entlang einer Kante des Verschlussbereichs (11) erstreckt.

8. Sportschuh (1) nach einem der Ansprüche 1-7, wobei das obere Band (22), das sich entlang der Kante des Verschlussbereichs (11) erstreckt, eine Vielzahl von Öffnungen (23) für Schnürsenkel umfasst.

9. Sportschuh (1) nach einem der Ansprüche 1-8, ferner umfassend eine Laufsohle (30), umfassend:
a. eine integrale Sohlenplatte (31), die sich von einem Fersenteil (32) über einen Mittelfußteil (33) in einen Vorderfußteil (34) der Laufsohle (30) erstreckt;
b. mindestens eine erste Verstärkungsrippe (37), die in die Sohlenplatte (31) integriert ist; und
c. eine Verstärkungsplatte (40), die auf oder unter der mindestens einen ersten Verstärkungsrippe (37) angeordnet ist.

10. Sportschuh (1) nach Anspruch 9, wobei mindestens ein Hohlraum (36) zwischen der Sohlenplatte (31) und der mindestens einen Verstärkungsplatte (40) angeordnet ist.

11. Sportschuh (1) nach einem der Ansprüche 9-10, wobei die Verstärkungsplatte (40) auf ihrer zur Sohlenplatte (31) gerichteten Seite mindestens eine zweite Verstärkungsrippe (41) umfasst, die sich mindestens teilweise parallel zur mindestens einen ersten Verstärkungsrippe (37) erstreckt.

12. Sportschuh (1) nach einem der Ansprüche 9-11, wobei der Fersenteil (32) der integralen Sohlenplatte (31) eine Fersenschale (32) umfasst.

13. Sportschuh (1) nach Anspruch 12, wobei die Fersenschale mindestens einen Seitenbereich (38) aus einem dritten Material umfasst, der durch Mehrkomponenten-Spritzguss mit dem Rest der Sohlenplatte (31) hergestellt werden kann.

## Revendications

1. Une chaussure de sport (1), en particulier une chaussure de football, comprenant :
a. une tige de chaussure (10) avec une région de fermeture (11) et une région de semelle (12) ; et
b. au moins un élément de renfort (20) solidarisé à l'intérieur de la tige de chaussure (10) et agencé dans la partie médiane du pied et comprenant une pluralité de bandes élastiques (21) s'étendant entre la région de fermeture (11) et la région de semelle (12), l'au moins un élément de renfort (20) comprenant en outre une bande inférieure (24) s'étendant le long d'un bord de la région de semelle (12),
c. dans laquelle la pluralité de bandes élastiques comprend des bandes élastiques (21) au niveau de l'intérieur médian et au niveau de l'intérieur latéral de la tige de chaussure (20), et
d. dans laquelle les au moins deux bandes élastiques (21) forment une intersection.

2. La chaussure de sport (1) de la revendication 1, dans laquelle les bandes élastiques (21) au niveau de l'intérieur médian de la tige de chaussure (10) sont formées plus élastiques qu'au niveau de l'intérieur latéral de la tige de chaussure (10).

3. La chaussure de sport (1) de la revendication 2, dans laquelle les bandes élastiques (21) au niveau de l'intérieur latéral de la tige de chaussure (10) sont essentiellement inélastiques.

4. La chaussure de sport (1) de l'une des revendications 1 à 3, dans laquelle au moins deux bandes élastiques (21) sont essentiellement parallèles.

5. La chaussure de sport (1) de l'une des revendications 1 à 4, dans laquelle l'au moins un élément de renfort (20) est fabriqué à partir d'un matériau ayant une épaisseur d'au plus 1,5 mm, de préférence de 0,3 mm.

6. La chaussure de sport (1) de l'une des revendications 1 à 5, dans laquelle chaque bande élastique (21) a une largeur comprise entre 0,5 cm et 2 cm.

7. La chaussure de sport (1) de l'une des revendications 1 à 6, dans laquelle l'au moins un élément de renfort (20) comprend en outre une bande supérieure (22) s'étendant le long d'un bord de la région de fermeture (11).

8. La chaussure de sport (1) de l'une des revendications 1 à 7, dans laquelle la bande supérieure (22) s'étendant le long du bord de la région de fermeture (11) comprend une pluralité d'ouvertures (23) pour des lacets.

9. La chaussure de sport (1) de l'une des revendications 1 à 8, comprenant en outre une semelle extérieure (30) comprenant :
a. une plaque de semelle d'une seule pièce (31), s'étendant d'une partie de talon (32) via une partie médiane du pied (33) jusque dans une partie d'avant-pied (34) de la semelle extérieure (30) ;
b. au moins une première nervure de renfort (37) d'une seule pièce avec la plaque de semelle (31) ; et
c. une plaque de renfort (40) agencée au-dessus ou au-dessous de l'au moins une première nervure de renfort (37).

10. La chaussure de sport (1) de la revendication 9, dans laquelle au moins une cavité (36) est agencée entre la plaque de semelle (31) et l'au moins une plaque de renfort (40).

11. La chaussure de sport (1) de l'une des revendications 9 à 10, dans laquelle la plaque de renfort (40) comprend sur son côté dirigé vers la plaque de semelle (31) au moins une seconde nervure de renfort (41) qui s'étend au moins en partie parallèlement à l'au moins une première nervure de renfort (37).

12. La chaussure de sport (1) de l'une des revendications 9 à 11, dans laquelle la partie de talon (32) de la plaque de semelle d'une seule pièce (31) comprend une coque de talon (32).

13. La chaussure de sport (1) de la revendication 12, dans laquelle la coque de talon comprend au moins une zone latérale (38) faite d'un troisième matériau qui peut être fabriqué par moulage par injection à composants multiples avec le reste de la plaque de semelle (31).
